# EUROPEAN PATENT SPECIFICATION

(11) **EP 4 222 597 B1**
(45) Date of publication and mention of the grant of the patent: **11.02.2026**
(21) Application number: 20956430.1
(22) Date of filing: 30.09.2020
(51) Int. Cl.: H04L 67/51, G06F 9/50, G06F 9/48, H04L 41/0853, H04L 41/0806, H04L 41/0866, H04L 41/042, H04L 41/18, H04L 41/082, H04L 41/0893, H04L 41/0895, H04L 43/10

(54) **TASK RESPONSIBILITY COORDINATION**
AUFGABENVERANTWORTUNGSKOORDINATION
COORDINATION DE RESPONSABILITÉS DE TÂCHES

(43) Date of publication of application: 09.08.2023
(73) Proprietor: Nokia Technologies Oy, 02610 Espoo (FI)
(72) Inventor: MOUROULIS, Ioannis, 19010 Athens (GR); CHANDRAMOULI, Devaki, Plano, Texas 75025 (US); KHARE, Saurabh, Bangalore 560005 (IN); LANDAIS, Bruno, 22560 Pleumeur-Bodou (FR)
(74) Representative: TBK
(86) International application number: PCT/US2020/053573
(87) International publication number: WO 2022/071945

(56) References cited:
- US-A1- 2011 099 552
- US-A1- 2011 116 434
- US-A1- 2020 301 726
- US-B1- 10 367 676
- US-B1- 6 842 896
- US-B2- 10 225 157

## Description

### Field

Various example embodiments relate to task responsibility coordination. More specifically, various example embodiments exemplarily relate to measures (including methods, apparatuses and computer program products) for realizing task responsibility coordination.

### Background

The present specification generally relates to task responsibility in network function groups acting as redundant systems. Equivalent control plane (CP) network function (NF) instances can be deployed as an "NF set" to provide distribution, redundancy and scalability. Here, the NF set is an example of network function groups acting as redundant systems.

NF instances within an NF set are considered interchangeable because they share the same context data. 5G-AN or 5GC network elements that need a service from an NF set can select any NF instance within the set to accomplish the service.

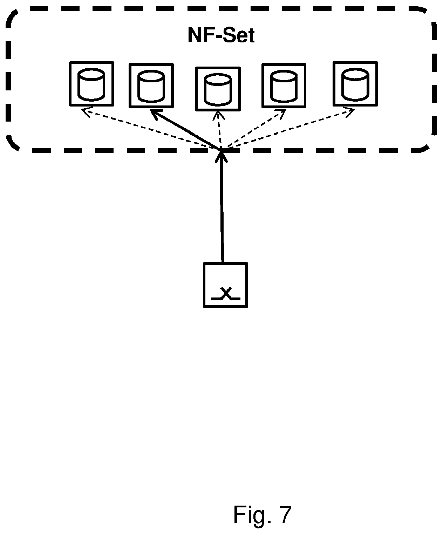

Figure 7 shows a schematic diagram of an example of network function groups acting as redundant systems. In particular, Figure 7 shows an NF set comprising a plurality of NFs (NF instances) as an example of network function groups acting as redundant systems, and the selection and access to one of the NFs (NF instances) within the NF set.

In Third Generation Partnership Project (3GPP) Rel-15, this concept was supported for access and mobility management functions (AMF), and in Rel-16, this is generalized for all NF types constituting the 5G Core network.

As NFs (NF instances) within a NF set share the same context data, there is no clear "ownership" of the context data when the corresponding user equipment (UE) is not being served by any NF (e.g. context for inactive or idle UEs) or the context data is simply common to all NFs (NF instances) in the NF set (e.g. configuration related data).

In case of activities triggered by 5G-AN or 5GC network elements on individual context resources, ownership is clear. 5G-AN or 5GC network elements may for example be consumers/producers of network functions. In such case, the NF instance selected by the 5G-AN or 5GC network element is responsible to accomplish the task.

However, NFs (NF instances) also have to execute activities that are not related to individual resources and not triggered by 5G-AN or 5GC network elements (e.g. consumers).

In such cases, an NF instance must act as a "delegate" for the NF set and accomplish the task on behalf of the NF set. If there is no delegation/coordination, the same action might either be
- executed multiple times: multiple or all NF instances within the NF set may repeat the same task
- not executed at all: no NF instance considers itself responsible to accomplish the task.

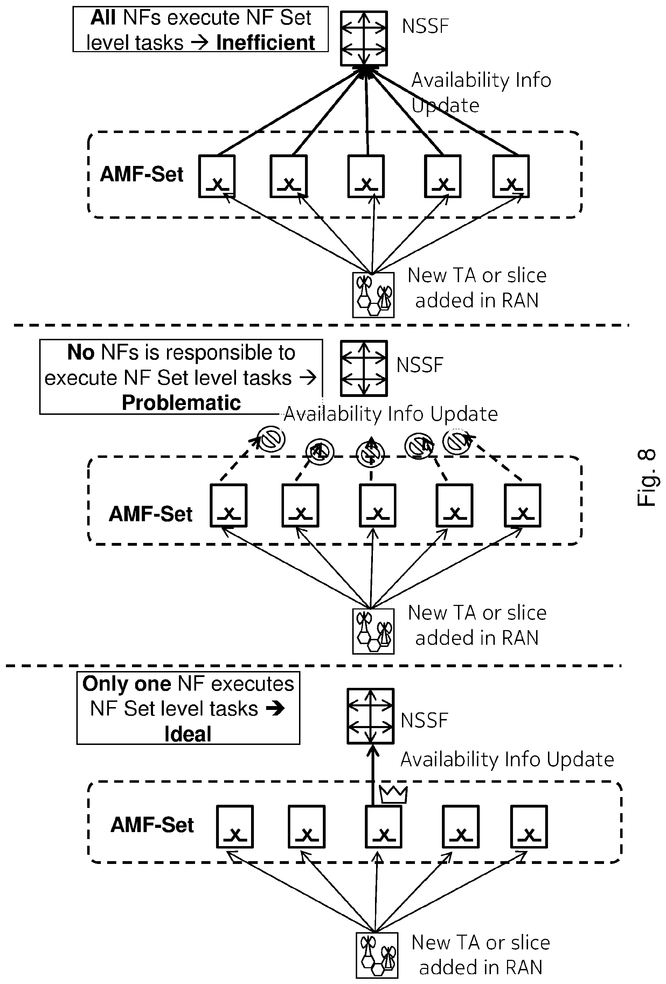

Figure 8 is a schematic diagram showing example cases of a leader selection in network function groups (AMF sets). In particular, Figure 8 present example use cases where a leader election can be used to achieve NF set level coordination. The above outlined possibilities (the same action is executed multiple times, the same action is not executed at all) are illustrated (upper section, middle section of Figure 8) together with the ideal case in which only one NF (NF instance) executes an NF set's level task (lower section of Figure 8).

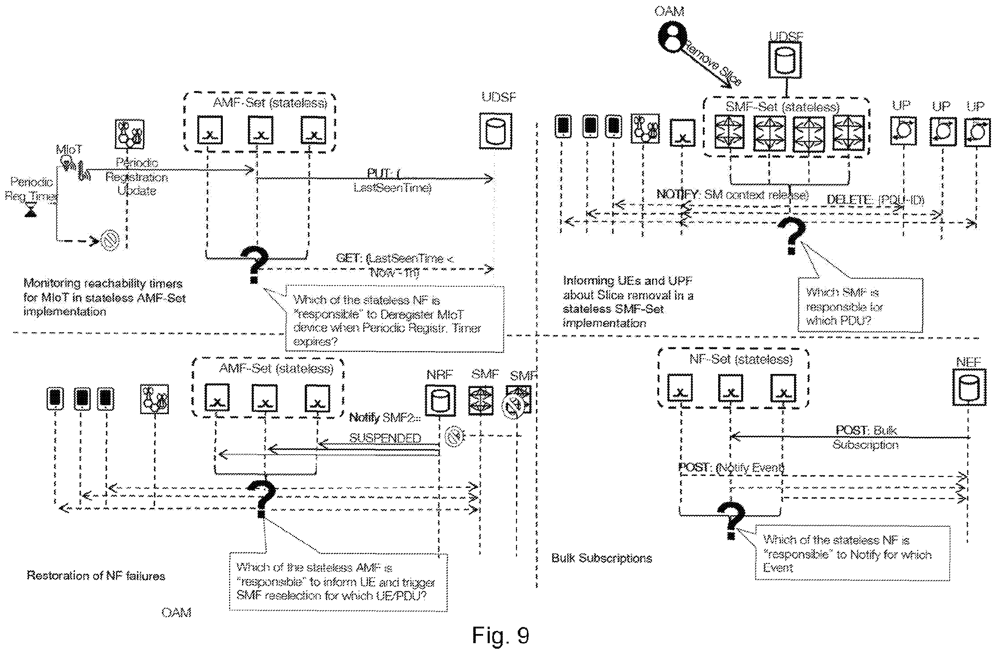

Figure 9 is a schematic diagram showing example cases of a leader selection processing in network function groups.

Some examples where delegation/coordination within an NF set is required are:
- AMFs updating the network slice selection function (NSSF) about the Slice support in radio access network (RAN): as per TS 23.501 5.18.8: "One or all AMF per AMF set provides and updates the NSSF with the S-NSSAIs support per TA",
- sending notification for bulk subscriptions (TS 23.502 4.15.3.2.4),
- deactivating all established packet data unit (PDU) sessions in a Slice that was removed from n session management function (SMF) set, and
- purging inactive UEs in an AMF set implemented with stateless AMF that use unstructured data storage function (UDSF) for back-end storage.

Leader election is often required when operations are implemented by replicated/distributed services. There are various leader election mechanisms available (e.g. Kubernetes, Zookeeper,

Amazon AWS offer such services), however, none of the existing solutions are appropriate for NF set leader selection due to:
- infrastructure dependency: they require that all NFs (NF instances) are deployed on a same infrastructure and are implemented with same technology (e.g. with Kubernetes leader election it is not possible to have a mix of containers and virtual network functions (VNF)),
- deployment limitations: services in many cases are only available within a same datacenter and are not designed to operate over geographically separated locations,
- need for separate security framework: proprietary/manual provisioning is required to control that only NFs (NF instances) belonging to the NF set can participate in the NF set leader election process, and
- lack of integration with 5G application programming interfaces (API): cannot leverage NF status notifications from network repository function (NRF) etc.

Hence, the problem arises that election of task related leaders of network function groups acting as redundant systems is to be enabled in a flexible manner without the limitations entailed by the known leader election mechanisms available.

Hence, there is a need to provide for task responsibility coordination.

*Prior art which relates to this field can be found in document* US 10 367 676 B1*, disclosing stable leader selection for distributed services. A system comprises a plurality of nodes of a distributed service, wherein individual ones of the plurality of nodes are implemented at respective computing devices, and a distributed role manager implemented at a plurality of computing devices, wherein the distributed role manager is configured to receive a leadership assignment request from a particular node of the plurality of nodes, determine that designation of the particular node as a leader node of the distributed service is permitted by a role assignment policy of the distributed service, wherein the leader node is responsible for fulfilling a first category of service requirements of the distributed service, select, from a first subset of a first set of dynamicallyassignable role indicator values, in accordance with a role indicator value selection order of the role assignment policy, a particular role indicator value to be assigned to the particular node, wherein the distributed role manager is not authorized to assign role indicator values in a second subset of the first set, wherein the role indicator values in the second subset are different than the role indicator values in the first subset, and wherein a backup role manager of the distributed service is authorized to assign a second role indicator value from the second subset to a node of the distributed service in the event of a failure, and transmit the particular role indicator value to the particular node, and wherein the particular node of the distributed service is configured to, after receiving the particular role indicator value from the distributed state manager, perform an operation to fulfill a service requirement of the first category.*

### Summary

Various example embodiments aim at addressing at least part of the above issues and/or problems and drawbacks.

Various aspects of example embodiments are set out in the appended claims.

*Objects of the present disclosure are achieved by what is defined in the appended independent claims. Advantageous modifications thereof are set forth in the appended dependent claims.*

Any one of the above aspects enables an efficient election of task related leaders of network function groups acting as redundant systems to thereby solve at least part of the problems and drawbacks identified in relation to the prior art.

By way of example embodiments, there is provided task responsibility coordination. More specifically, by way of example embodiments, there are provided measures and mechanisms for realizing task responsibility coordination.

Thus, improvement is achieved by methods, apparatuses and computer program products enabling/realizing task responsibility coordination.

### Brief description of the drawings

In the following, the present disclosure will be described in greater detail by way of non-limiting examples with reference to the accompanying drawings, in which
Figure 1 is a block diagram illustrating an apparatus according to example embodiments,
Figure 2 is a block diagram illustrating an apparatus according to example embodiments,
Figure 3 is a block diagram illustrating an apparatus according to example embodiments,
Figure 4 is a block diagram illustrating an apparatus according to example embodiments,
Figure 5 is a schematic diagram of a procedure according to example embodiments,
Figure 6 is a schematic diagram of a procedure according to example embodiments,
Figure 7 shows a schematic diagram of an example of network function groups acting as redundant systems,
Figure 8 is a schematic diagram showing example cases of a leader selection in network function groups (AMF sets),
Figure 9 is a schematic diagram showing example cases of a leader selection processing in network function groups,
Figure 10 shows a schematic diagram of signaling sequences according to example embodiments,
Figure 11 shows a schematic diagram of signaling sequences according to example embodiments,
Figure 12 shows a schematic diagram of signaling sequences according to example embodiments,
Figure 13 shows a schematic diagram of signaling sequences according to example embodiments,
Figure 14 shows a schematic diagram of signaling sequences according to example embodiments,
Figure 15 shows a schematic diagram of signaling sequences according to example embodiments,
Figure 16 shows a schematic diagram of signaling sequences according to example embodiments,
Figure 17 shows a schematic diagram of signaling sequences according to example embodiments, and
Figure 18 is a block diagram alternatively illustrating apparatuses according to example embodiments.

### Detailed description

The present disclosure is described herein with reference to particular non-limiting examples and to what are presently considered to be conceivable embodiments. A person skilled in the art will appreciate that the disclosure is by no means limited to these examples, and may be more broadly applied within the scope of the invention as defined by the appended claims.

It is to be noted that the following description of the present disclosure and its embodiments mainly refers to specifications being used as non-limiting examples for certain exemplary network configurations and deployments. Namely, the present disclosure and its embodiments are mainly described in relation to 3GPP specifications being used as non-limiting examples for certain exemplary network configurations and deployments. As such, the description of example embodiments given herein specifically refers to terminology which is directly related thereto.

Hereinafter, various embodiments and implementations of the present disclosure and its aspects or embodiments are described using several variants and/or alternatives. It is generally noted that, according to certain needs and constraints, all of the described variants and/or alternatives may be provided alone or in any conceivable combination (also including combinations of individual features of the various variants and/or alternatives) as long as encompassed within the scope of the invention as defined by the appended claims.

According to example embodiments, in general terms, there are provided measures and mechanisms for (enabling/realizing) task responsibility coordination.

To summarize, according to example embodiments, leader election mechanisms based on 5G service based architecture APIs using either the NRF or the UDSF are provided.

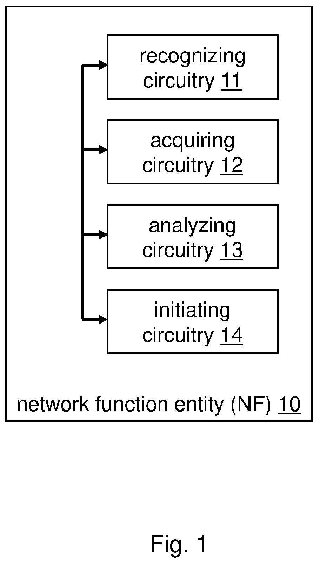

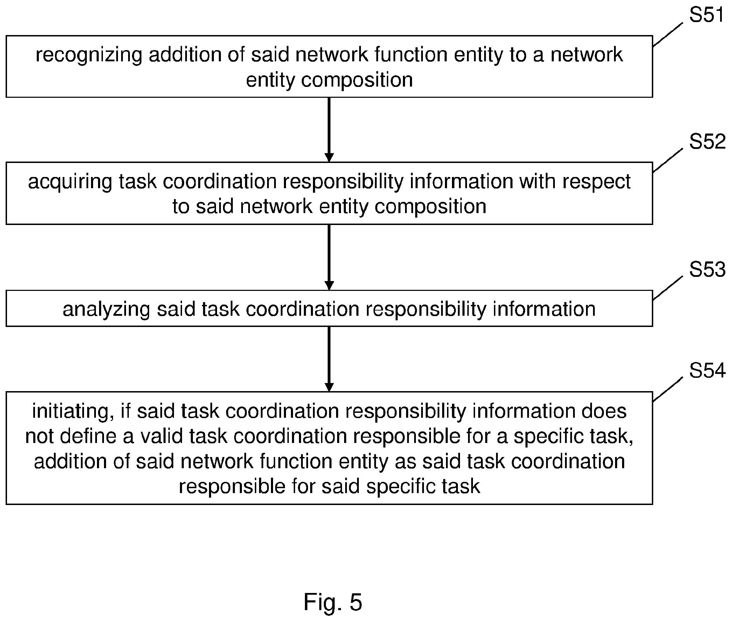

Figure 1 is a block diagram illustrating an apparatus according to example embodiments. The apparatus may be a network function entity 10 comprising a recognizing circuitry 11, an acquiring circuitry 12, an analyzing circuitry 13, and an initiating circuitry 14. The recognizing circuitry 11 recognizes addition of said network function entity to a network entity composition. The acquiring circuitry 12 acquires task coordination responsibility information with respect to said network entity composition. The analyzing circuitry 13 analyzes said task coordination responsibility information. The initiating circuitry 14 initiates, if said task coordination responsibility information does not define a valid task coordination responsible for a specific task, addition of said network function entity as said task coordination responsible for said specific task. Figure 5 is a schematic diagram of a procedure according to example embodiments. The apparatus according to Figure 1 may perform the method of Figure 5 but is not limited to this method. The method of Figure 5 may be performed by the apparatus of Figure 1 but is not limited to being performed by this apparatus.

As shown in Figure 5, a procedure according to example embodiments comprises an operation of recognizing (S51) addition of said network function entity to a network entity composition, an operation of acquiring (S52) task coordination responsibility information with respect to said network entity composition, an operation of analyzing (S53) said task coordination responsibility information, and an operation of initiating (S54), if said task coordination responsibility information does not define a valid task coordination responsible for a specific task, addition of said network function entity as said task coordination responsible for said specific task.

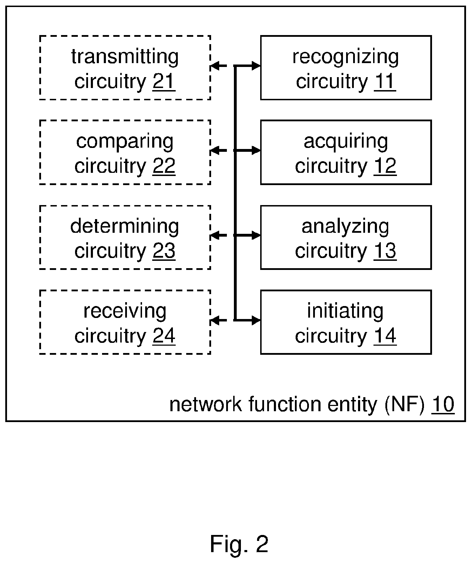

Figure 2 is a block diagram illustrating an apparatus according to example embodiments. In particular, Figure 2 illustrates a variation of the apparatus shown in Figure 1. The apparatus according to Figure 2 may thus further comprise a transmitting circuitry 21, a comparing circuitry 22, a determining circuitry 23, and/or a receiving circuitry 24.

In an embodiment at least some of the functionalities of the apparatus shown in Figure 1 (or 2) may be shared between two physically separate devices forming one operational entity. Therefore, the apparatus may be seen to depict the operational entity comprising one or more physically separate devices for executing at least some of the described processes.

According to a variation of the procedure shown in Figure 5, exemplary details of the initiating operation (S54) are given, which are inherently independent from each other as such. Such exemplary initiating operation (S54) according to example embodiments may comprise an operation of transmitting a new task coordination responsibility information record including information on said specific task and an identifier of said network function entity.

According to further example embodiments, said new task coordination responsibility information record is transmitted towards an unstructured data storage function entity-

Alternatively, according to further example embodiments, said new task coordination responsibility information record is transmitted towards a network repository function entity.

According to a variation of the procedure shown in Figure 5, exemplary additional operations are given, which are inherently independent from each other as such. According to such variation, an exemplary method according to example embodiments may comprise an operation of comparing, if said task coordination responsibility information defines a valid task coordination responsible for said specific task, a priority of said task coordination responsible for said specific task with a priority of said network function entity for said specific task, and an operation of initiating, if said priority of said network function entity for said specific task is higher than said priority of said task coordination responsible for said specific task, a replacement of said task coordination responsible for said specific task by said network function entity as a new task coordination responsible for said specific task.

According to a variation of the procedure shown in Figure 5, exemplary additional operations are given, which are inherently independent from each other as such. According to such variation, an exemplary method according to example embodiments may comprise an operation of comparing, if said task coordination responsibility information defines a valid task coordination responsible for said specific task, information on expiry of task coordination responsibility of said task coordination responsible for said specific task with a present point in time, and an operation of initiating, if said information on expiry of task coordination responsibility of said task coordination responsible for said specific task indicates that task coordination responsibility of said task coordination responsible for said specific task is expired at said present point in time, a replacement of said task coordination responsible for said specific task by said network function entity as a new task coordination responsible for said specific task.

According to a variation of the procedure shown in Figure 5, exemplary additional operations are given, which are inherently independent from each other as such. According to such variation, an exemplary method according to example embodiments may comprise an operation of determining availability of said task coordination responsible for said specific task, and an operation of initiating, if said task coordination responsible for said specific task is determined unavailable, a replacement of said task coordination responsible for said specific task by said network function entity as a new task coordination responsible for said specific task.

According to a variation of the procedure shown in Figure 5, exemplary details of the initiating operation (initiating said replacement) are given, which are inherently independent from each other as such. Such exemplary initiating operation (initiating said replacement) according to example embodiments may comprise an operation of transmitting an update task coordination responsibility information record including information on said specific task and an identifier of said network function entity.

According to further example embodiments, said update task coordination responsibility information record is transmitted towards an unstructured data storage function entity.

Alternatively, according to further example embodiments, said update task coordination responsibility information record is transmitted towards a network repository function entity.

According to a variation of the procedure shown in Figure 5, exemplary additional operations are given, which are inherently independent from each other as such. According to such variation, an exemplary method according to example embodiments may comprise an operation of transmitting, towards said task coordination responsible for said specific task, an indication that said task coordination responsible for said specific task is replaced by said network function entity as said new task coordination responsible for said specific task.

According to a variation of the procedure shown in Figure 5, exemplary additional operations are given, which are inherently independent from each other as such. According to such variation, an exemplary method according to example embodiments may comprise an operation of receiving, from a network repository function entity or an unstructured data storage entity, information on a change of task coordination responsibility for said specific task.

According to a variation of the procedure shown in Figure 5, exemplary additional operations are given, which are inherently independent from each other as such. According to such variation, said network function entity has registered as task coordination responsible for a first task, and an exemplary method according to example embodiments may comprise an operation of receiving, from a new task coordination responsible for said first task, an indication that said network function entity is replaced by said new task coordination responsible for said first task as said new task coordination responsible for said first task.

According to further example embodiments, an entry specific for a certain task of said task coordination responsibility information includes information on at least said certain task, an identifier of a task coordination responsible for said certain task, a priority of said task coordination responsible for said certain task, information on expiry of responsibility of said task coordination responsible for said certain task, and a uniform resource identifier of said task coordination responsible for said certain task.

According to further example embodiments, said network entity composition is one of a network function set, a network function service set, and a network function group acting as a redundant system.

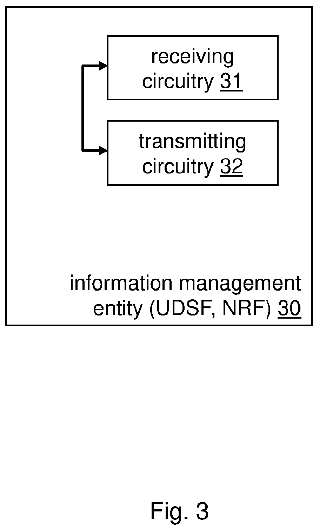

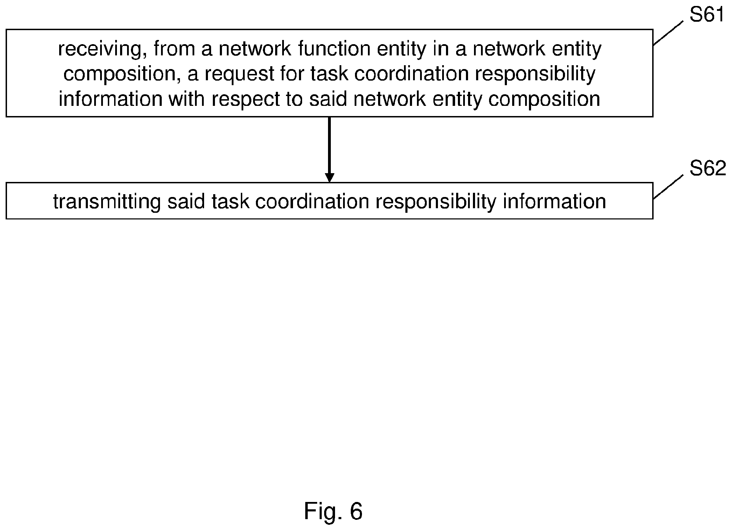

Figure 3 is a block diagram illustrating an apparatus according to example embodiments. The apparatus may be an information management entity 30 (providing task coordination responsibility information) such as an unstructured data storage function entity or a network repository function entity comprising a receiving circuitry 31 and a transmitting circuitry 32. The receiving circuitry 31 receives, from a network function entity in a network entity composition, a request for task coordination responsibility information with respect to said network entity composition. The transmitting circuitry 32 transmits said task coordination responsibility information. Figure 6 is a schematic diagram of a procedure according to example embodiments. The apparatus according to Figure 3 may perform the method of Figure 6 but is not limited to this method. The method of Figure 6 may be performed by the apparatus of Figure 3 but is not limited to being performed by this apparatus.

As shown in Figure 6, a procedure according to example embodiments comprises an operation of receiving (S61), from a network function entity in a network entity composition, a request for task coordination responsibility information with respect to said network entity composition, and an operation of transmitting (S62) said task coordination responsibility information.

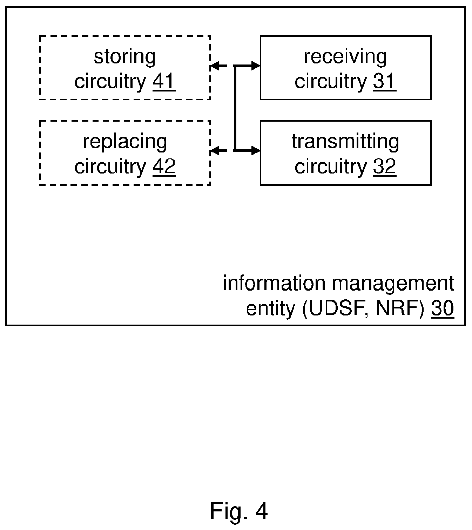

Figure 4 is a block diagram illustrating an apparatus according to example embodiments. In particular, Figure 4 illustrates a variation of the apparatus shown in Figure 3. The apparatus according to Figure 4 may thus further comprise a storing circuitry 41 and/or a replacing circuitry 42.

In an embodiment at least some of the functionalities of the apparatus shown in Figure 3 (or 4) may be shared between two physically separate devices forming one operational entity. Therefore, the apparatus may be seen to depict the operational entity comprising one or more physically separate devices for executing at least some of the described processes.

According to a variation of the procedure shown in Figure 6, exemplary additional operations are given, which are inherently independent from each other as such. According to such variation, an exemplary method according to example embodiments may comprise an operation of receiving a new task coordination responsibility information record including information on a specific task and an identifier of said network function entity, and an operation of storing said new task coordination responsibility information record to said task coordination responsibility information.

According to a variation of the procedure shown in Figure 6, exemplary additional operations are given, which are inherently independent from each other as such. According to such variation, an exemplary method according to example embodiments may comprise an operation of receiving an update task coordination responsibility information record including information on a specific task and an identifier of said network function entity, and an operation of replacing a hitherto valid task coordination responsibility information record for said specific task by said update task coordination responsibility information record in said task coordination responsibility information.

According to a variation of the procedure shown in Figure 6, exemplary additional operations are given, which are inherently independent from each other as such. According to such variation, an exemplary method according to example embodiments may comprise an operation of transmitting information on a change of task coordination responsibility for said specific task.

According to further example embodiments, said information management entity is an unstructured data storage function entity.

Alternatively, according to further example embodiments, said information management entity is a network repository function entity.

According to further example embodiments, an entry specific for a certain task of said task coordination responsibility information includes information on at least said certain task, an identifier of a task coordination responsible for said certain task, a priority of said task coordination responsible for said certain task, information on expiry of responsibility of said task coordination responsible for said certain task, and a uniform resource identifier of said task coordination responsible for said certain task.

According to further example embodiments, said network entity composition is one of a network function set, a network function service set, and a network function group acting as a redundant system.

In more specific terms, according to example embodiments, coordination of the NF instances of an NF set is facilitated via a "leader election" mechanism which is based on 3GPP 5GC APIs.

Here, it is noted that example embodiments are described with an NF set and NF instances as an example only. However, the concept as described can also be applied for NF service sets and NF groups or any other implementation where multiple NFs (NF instances) are deployed to establish system redundancy, i.e., a network function group acting as a redundant system (e.g. if authentication server functions (AUSF) are deployed supporting NG group concept, then AUSF instances in AUSFGroup can utilize this concept to perform leader selection).

According to example embodiments, the leader election mechanism can be used to nominate the NF instance that will coordinate the execution of certain tasks that are not triggered by 5G-AN or 5GC network elements (e.g. consumers) acting on individual resources. 5G-AN or 5GC network elements may for example be consumers/producers of network functions. If in the present specification it is referred to such consumers/producers (e.g. as some kind of actors), this reference is to be considered as an example only, while the present concept is applicable with respect to 5G-AN or 5GC network elements (e.g. as some kind of actors) in general.

According to example embodiments, consequently, customizable leader granularity and scope are supported:
- the elected leader may, but is not required to execute the task (e.g. leader could delegate a portion of the actions to other NF instances in the NF set in case of mass activities),
- an NF set may have a different NFs (NF instances) elected as leader for different tasks (e.g. one AMF instance in the AMF set may be delegated to update the NSSF for RAN/Slice changes while another AMF instance in the AMF set may be responsible to coordinate the UE purge procedure).

Example embodiments are based on the UDSF API.

Further example embodiments are based on the NRF API.

In the following, example embodiments based on the UDSF API are described in the more specific terms (UDSF based leader selection).

According to example embodiments, the UDSF based leader election is based on the Nudsf_DataRepository API as specified in Rel-16 TS 29.598.

According to example embodiments, the data model related to the UDSF based leader election is the following:
- NF set leadership information is stored in the "tags" field of the RecordMeta information element (IE) under a predefined resource in the UDSF, e.g. "realmId/storageId(nfSetID)/records/ {nfSetLeaderTaskMap}/meta".
- The leadership information is stored in the tags IE which is a map. The tag name is a concatenation of the task name and the task attribute. According to example embodiments, each task has the following attributes:
   - Leader UUID: used to check via NRF overall NF availability or service URIs (e.g. for request forwarding),
   - Still-lead-CallbackURI: issued to check validity of leadership or negotiate transfer of leadership among the NFs (NF instances); this attribute is required only in case UDSF does not support Data change Notifications, otherwise presence is optional
   - Priority: indicates priority of current leader, and is used to decide if NF (NF instance) should attempt to reclaim leadership for this task, and
   - Expires: indicates when the current leadership expires.

According to alternative example embodiments, a separate RecordId is defined for each task name and includes only the task attribute as the key.

The RecordMeta IE is defined in TS 29.598 as follows (Table 6.1.6.2.3-1: Definition of type RecordMeta)

| **Attribute name** | **Data type** | **P** | **Cardinality** | **Description** | **Applicability** |
|---|---|---|---|---|---|
| tags | map(array (string)) | O | 1..N | A map of tag name/values pairs, where the tag name is a unique string name that is the primary key of the map and is paired with an array of string values. | |
| ttl | DateTime | O | 0..1 | ttl refers to the lifetime of the record. After the expiry, the record shall be deleted. | |
| callbackReference | Uri | O | 0..1 | The Uri where the NF Service Consumer shall receive notification on the expiry of the Record as indicated by the ttl attribute if desired. | |

According to example embodiments, the leader election procedure is executed as follows.

When an NF instance is added in the NF set, the NF instance reads the nfSetLeaderTaskMap from the UDSF in the predefined location.

If there is no record stored, the only (new) NF instance is considered as the leader by default, and the NF instance creates the record adding itself as the leader for all tasks.

According to example embodiments, the priority and expiration duration each NF instance sets for each task is preconfigured (e.g. via operations, administration and maintenance (OAM)).

If a record exists, according to example embodiments, the NF instance compares the priority stored in the record with its own priority for each task.

If the NF instance has equal or lower priority, the existing leader for the task maintains the task leadership.

On the other hand, if the NF instance has a higher priority, the NF instance updates the leader for the task. In such case, if the UDSF does not support data change notifications (alternative 1), the NF instance (the new leader for the task) sends a message to the Still-lead-CallbackURI of the old leader to update ownership (i.e. elect itself as a leader and notify removal to the old leader). Alternatively, in such case, if the UDSF supports data change notifications (alternative 2), the UDSF may notify all the Consumer NFs (NF instances) that have subscribed to nfSetLeaderTaskMap Data change notifications about the new task leader by conveying the new nfSetLeaderTaskMap.

According to example embodiments, NFs (NF instances) in the NF set may be notified by the NRF when a certain NF instance is no longer available (i.e. either due to planned or unplanned failure).

When NFs (NF instances) realize (e.g. via NRF) that the current task leader is no longer available, according to example embodiments, the NFs (NF instances) attempt to get leadership.

When the current leader relinquishes its leadership for a certain task, if the UDSF does not support Data change notification, the current leader may notify other remaining NFs (NF instances) in the NF set allowing the other NFs (NF instances) to gain leadership for the corresponding task. According to example embodiments, this optional step can be implemented by advertising the Callback URI in a default notification URI in the NF profile. Otherwise, when the current leader relinquishes its leadership for a certain task, and if the UDSF supports Data change notifications, the UDSF may notify all the Consumer NFs (NF instances) that have subscribed to nfSetLeaderTaskMap Data change notifications about the new task leader by conveying the new nfSetLeaderTaskMap.

In case multiple NFs (NF instances) attempt to gain leadership for a certain task, according to example embodiments, the collision handling mechanism based on Still-Lead-CallbackURI and eTag HTTP header is used. In case the current task leader which does not lead a task anymore for whatever reason receives a request in the Still-Lead-CallbackURI, according to example embodiments, the current task leader responds with "404 Not found."

According to example embodiments, the leader Expires tag is handled as follows.

If the NF instance is currently a leader of a task and desires to maintain the leadership for a task that is about to expire, the current leader has to extend the "Expires" by updating the relevant tag in the nfSetLeaderTaskMap.

Further, the NF instances that are not leaders poll the UDSF whenever the leadership of a task expires. If the Expires field indicates that leadership has already expired, the NF instances attempt to acquire the leadership.

In the following, example embodiments based on the NRF API are described in the more specific terms (NRF based leader selection).

The NRF based leader election is based on the Nnrf API as specified in Rel-16 TS 29.510 and is extended by an NF set profile.

An NF set profile, or more general, a network entity composition profile, is a registered profile which may contain attributes which are valid for all members of the network entity composition (e.g. of the NF set). As such, (common) attributes of a network entity profile (e.g. an NF profile) may be outsourced to the network entity composition profile (e.g. the NF set profile).

According to example embodiments, the network entity composition profile (e.g. the NF set profile) by be identified by a network entity composition profile identifier (e.g. NF set profile ID), and the belonging of a network entity (e.g. NF instance) to the network entity composition (e.g. of the NF set) may be indicated in that a network entity profile (e.g. an NF profile) refers to the corresponding network entity composition profile identifier (e.g. the NF set profile ID).

According to example embodiments, to reduce the parameters of NF profiles for each NF instance, an NF set can be created separately and registered in the NRF via OAM or one of the NF instance. When a NF (NF instance) is initially added in the NF set, the NF (instance) reads the nfSetLeaderTaskMap IE from the nfSet profile (NF set profile) the NF (instance) belongs to.

According to example embodiments, the data model related to the NRF based leader election is the following:
- The NF set profile includes an nfSetLeaderTaskMap IE in which the task name is the key and which contains the following values:
   - leader UUID: used to check via NRF overall NF (NF instance) availability or service URIs (e.g. for request forwarding),
   - Still-lead-CallbackURI: used to check validity of leadership,
   - Priority: indicates priority of current leader, and is used to decide if NF (NF instance) should attempt to reclaim leadership for this task, and
   - Expires: indicates when the leadership expires.

According to example embodiments, the leader election procedure is executed as follows.

When an NF (NF instances) is initially added in the NF set, the NF (instance) reads the nfSetLeaderTaskMap IE from the nfSet profile the NF (instance) belongs to.

If there is no NF set profile stored, the only (new) NF instance is by default considered as the leader, and the NF instance creates the records, setting itself as the leader for all tasks.

If the NF set profile already exists, the NF instance compares the task priority stored in the nfSetLeaderTaskMap with its own priority for each task. According to example embodiments, the priority and expiry duration each NF sets for each task is pre-configured within the NF instances (e.g. provisioned via OAM).

If the NF (instance) has equal or lower priority, the existing leader for the task remains.

If the NF (instance) has a higher priority, the NF instance issues an NFUpdate request to the NRF to update the nfSetLeaderTaskMap of the NF set profile setting itself as the leader for the task.

According to example embodiments, the NRF notifies the other NFs (NF instances) in the NF set about the NFSetProfile update (in a similar manner it notifies for any other NFProfile update). According to example embodiments, all NFs (NF instances) in the NF set subscribe to NRF for updates regarding the NF set profile or status changes of NFs (NF instances) within the set.

According to further example embodiments, all NFs (NF instances) subscribe in the NRF to get notified about NF set profile changes. NFs (NF instances) in the NF set may be notified by the NRF when a certain NF instance is no longer available (i.e. either due to planned or unplanned failure).

When NFs (NF instances) realize that the current NF task leader is no longer available or the NF set profile indicates that the NF(s) (NF instance(s)) have higher priority than the stored leader, according to example embodiments, the NF(s) (NF instance(s)) attempt to get leadership.

According to example embodiments, an eTag header is used to resolve collision handling when multiple NFs (NF instances) attempt to gain leadership the same time.

According to example embodiments, the "still-lead-check-URI can be used as an optional complementary "leadership heartbeat" mechanism directly between NFs (NF instances), e.g. if standard NRF based profile update mechanism is not considered sufficiently responsive for the time criticality of the task. This heartbeat period can be different per task.

According to further example embodiments, in case the current owner for whatever reasons does not lead the task anymore, the current owner responds with "404 Not found" (e.g. to contacting via the Still-Lead-CallbackURI).

As mentioned above, the example embodiments are described above using the NF set example scenarios, however, according to example embodiments, the disclosed concept can also be applied for NF service sets and NF groups or any other implementation where multiple NFs (NF instances) are deployed to make a system redundant (e.g. if AUSFs are deployed supporting NG group concept, then AUSF instances in AUSFGroup can utilize this concept to perform leader selection).

In the following, example embodiments based on the UDSF API are described in more detail (UDSF based leader selection).

When an NF instance is initially added in an NF set, according to example embodiments, the NF instance acquires the nfSetLeaderTaskMap from the UDSF. The task map is stored in the RecordMeta tag IE of a record in a predefined location (e.g. realmId/storageId(nfSetID)/records/ {nfSetLeaderTaskMap}.)

If the NF (instance) is the first NF (NF instance) added in the NF set and the nfSetLeaderTaskMap is not stored, according to example embodiments, the NF (NF instance) creates the record setting itself as the leader NF (NF instance) for all the tasks so that it can be acquired by the NF instances that will subsequently be added in the NF set.

For example, if an NF set has two tasks, one named "purgeUe" and another "smfFail", for which leader election is needed, according to example embodiments, the nfSetLeaderTaskMap RecordMeta tags IE could be set as follows:

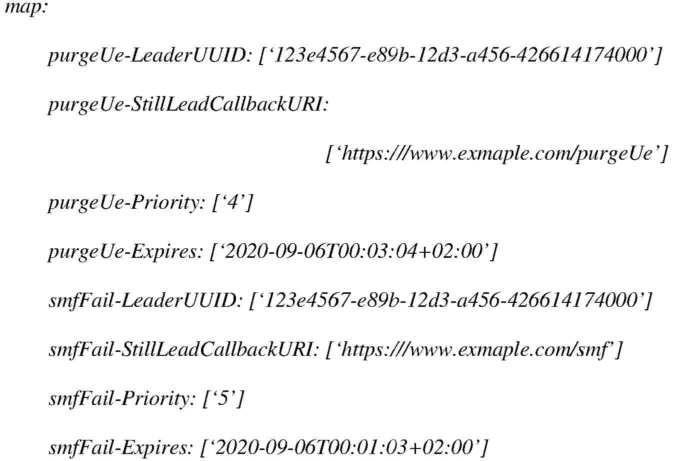

When in the following it is referred to NFs NF 1 to NF 3, these are to be considered as NF instances and in particular as NF instances belonging to the same NF set at least on entering the NF set.

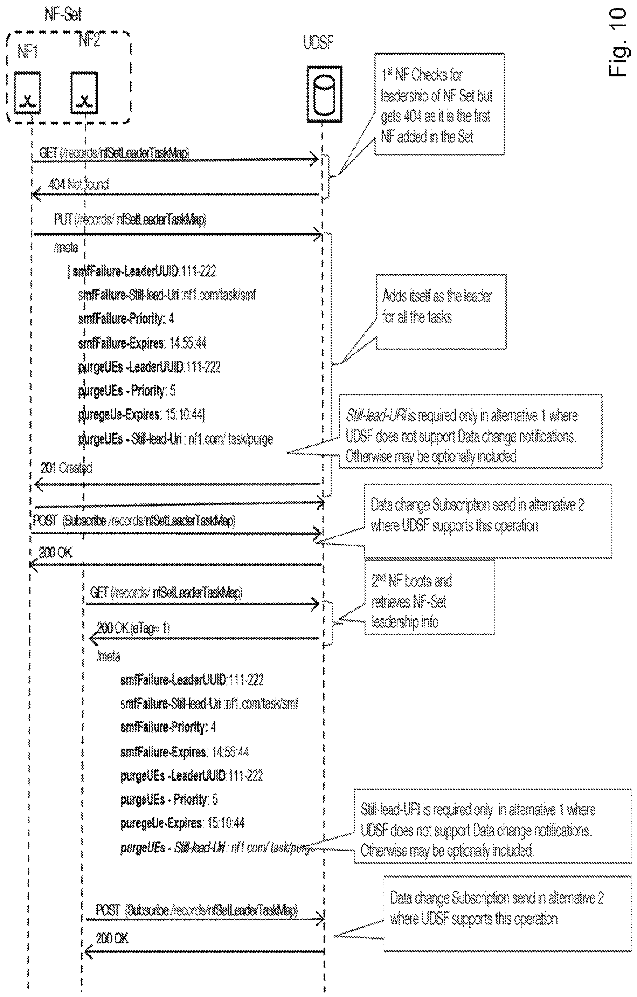

Figure 10 shows a schematic diagram of signaling sequences according to example embodiments. In particular, Figure 10 presents an example call flow of NF instances belonging in the NF set acquiring and storing leadership RecordMeta in the UDSF.

As shown in Figure 10, an NF (NF 1) acquires the nfSetLeaderTaskMap from the UDSF (GET request), while this request is responded with "404 Not found" (if the nfSetLeaderTaskMap is not stored).

As a consequence, the NF 1 adds itself as the leader for the tasks "smfFailure" and "purgeUe" ["purgeUEs"] (PUT request).

Once a further NF (NF 2) requests the nfSetLeaderTaskMap from the UDSF, the NF 2 is provided with the current leadership entries.

In case a task leadership has expired or a NF instance has higher priority for one or more tasks, according to example embodiments, the NF instance updates the relevant tags in the RecordMeta of the nfSetLeaderTaskMap in UDSF.

According to example embodiments, in case the UDSF does not support data change notifications the NF instance informs the previous task leader about the lead ownership change by sending a relevant request to the Still-lead-CallbackURI. If the UDSF supports data change notifications, the UDSF will notify all the subscribed network entities accordingly.

It is noted that according to example embodiments, in case the UDSF does not support data change notifications, the other NFs (NF instances) in the NF-set do not need to be informed about the change of leadership at this phase. The other NFs (NF instances) in the NF set will be automatically informed when they poll UDSF to refresh the leadership data (based on Expiration attribute).

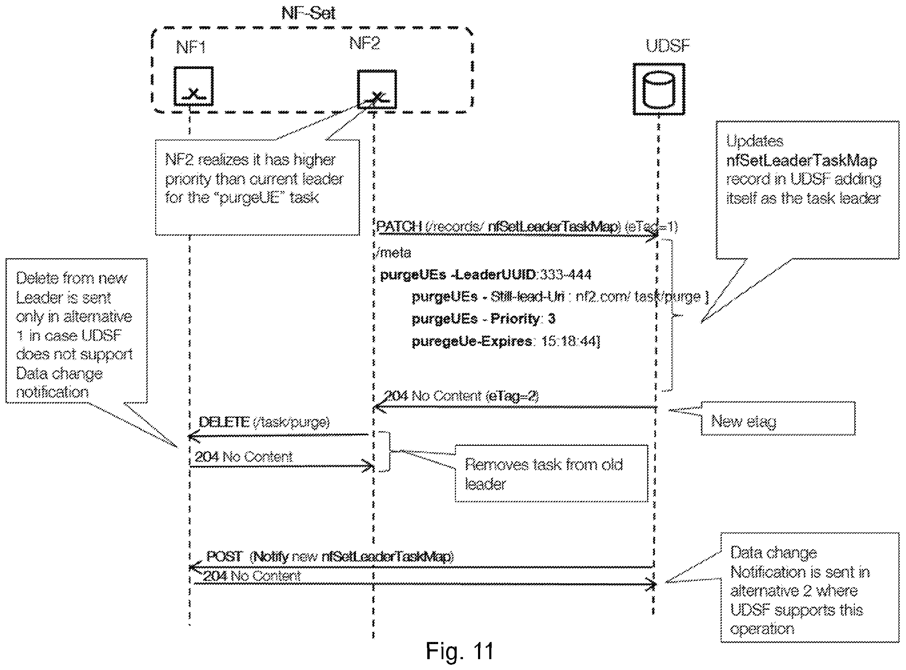

Figure 11 shows a schematic diagram of signaling sequences according to example embodiments. In particular, Figure 11 provides a relevant example call flow for the above-outlined case.

As shown in Figure 11, once NF 2 realizes that it has a higher priority than the current leader for the "purgeUe" task, the NF 2 initiates an update with respect to the "purgeUe" task at the UDSF (PATCH request).

Further, in case the UDSF does not support data change notifications (alternative 1), the NF 2 contacts the former task leader (NF 1) and informs of the change of the leadership (DELETE request). Otherwise, if the UDSF supports data change notifications (alternative 2), the UDSF may notify all the Consumer NFs (NF instances) that have subscribed to nfSetLeaderTaskMap Data change notifications about the new task leader by conveying the new nfSetLeaderTaskMap. According to example embodiments, in case the UDSF does not support data change notifications, optionally, all NFs (NF instances) in the NF set may be registered to the Callback URI in the NRF in order to receive notifications. The URI can be added in the NF profiles as DefaultNotificationSubscription that uses e.g. a new notification type (e.g. "NF_SET_TASK_LEADER_CHANGE_NOTIFICATION" as shown in the third table below.

The three tables below represent the definition of type NFProfile (first table below: Table 6.2.6.2.3-1: Definition of type NFProfile), the definition of type DefaultNotificationSubscription (second table below: Table 6.1.6.2.4-1: Definition of type DefaultNotificationSubscription), and the definition of enumeration NotificationType (third table below: Table 6.1.6.3.4-1: Enumeration NotificationType) according to TS 29.510 (Note: for clarity only a subset of the fields of "NFProfile" and "DefaultNotificationSubscription" and "NotificationType" as defined in TS 29.510 are shown).

| **Attribute name** | **Data type** | **P** | **Cardinality** | **Description** |
|---|---|---|---|---|
| nflnstanceId | NflnstanceId | M | 1 | Unique identity of the NF Instance. |
| defaultNotification-Subscriptions | array(DefaultNotificationSubscription) | O | 1..N | Notification endpoints for different notification types. |
| | | | | (NOTE 6) |

| **Attribute name** | **Data type** | **P** | **Cardinality** | **Description** |
|---|---|---|---|---|
| notificationType | NotificationType | M | 1 | Type of notification for which the corresponding callback URI is provided. |
| callbackUri | Uri | M | 1 | This attribute contains a default notification endpoint to be used by a NF Service Producer towards an NF Service Consumer that has not registered explicitly a callback URI in the NF Service Producer (e.g. as a result of an implicit subscription). |
| n1MessageClass | N1MessageClass | C | 0..1 | If the notification type is N1_MESSAGES, this IE shall be present and shall identify the class of N1 messages to be notified. |
| n2InformationClass | N2InformationClass | C | 0..1 | If the notification type is N2_INFORMATION, this IE shall be present and shall identify the class of N2 information to be notified. |

| **Enumeration value** | **Description** |
|---|---|
| "N1_MESSAGES" | Notification of N1 messages |
| "N2_INFORMATION" | Notification of N2 information |
| "LOCATION_NOTIFICATION" | Notification of Location Information by AMF/LMF towards NF Service Consumers (e.g GMLC) |
| "DATA_REMOVAL_NOTIFICATION" | Notification of Data Removal by UDR (e.g., removal of UE registration data upon subscription withdrawal) |
| "DATA_CHANGE_NOTIFICATION" | Notification of Data Changes by UDR |
| "NF_SET_TASK_LEADER_CHANGE_NOTIFICATION" | Notification of NF-Set Task Leader Change. |

In case an NF instance in an NF set realizes that an NF instance that is a leader is no longer available, the NF instance will attempt to acquire the leadership irrespective of whether the NF instance has lower priority than the current leader.

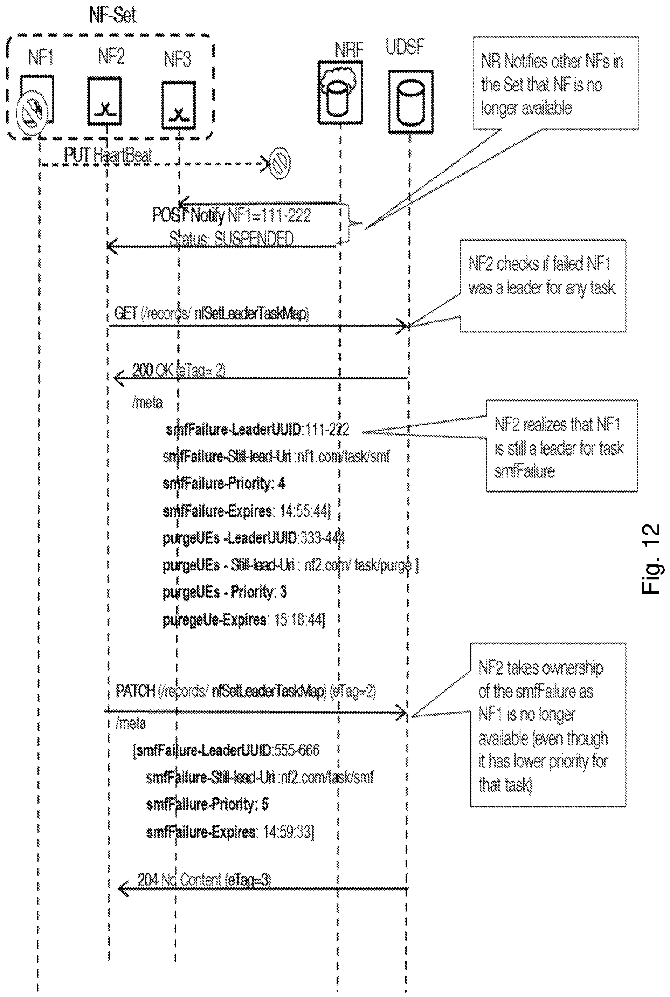

Figure 12 shows a schematic diagram of signaling sequences according to example embodiments.

As shown in Figure 12, once NF 2 recognizes that NF 1 is unavailable, according to example embodiments, NF 2 checks with the UDSF whether NF 1 was a leader for any task (GET request).

The NF 2 is informed of the current entries. Based thereon, the NF 2 recognizes that NF 1 is still a leader for the task "smfFailure".

In response thereto, according to example embodiments, NF 2 takes ownership of the task "smfFailure" irrespective of its lower priority, i.e., the NF 2 initiates an update with respect to the "smfFailure" task at the UDSF (PATCH request).

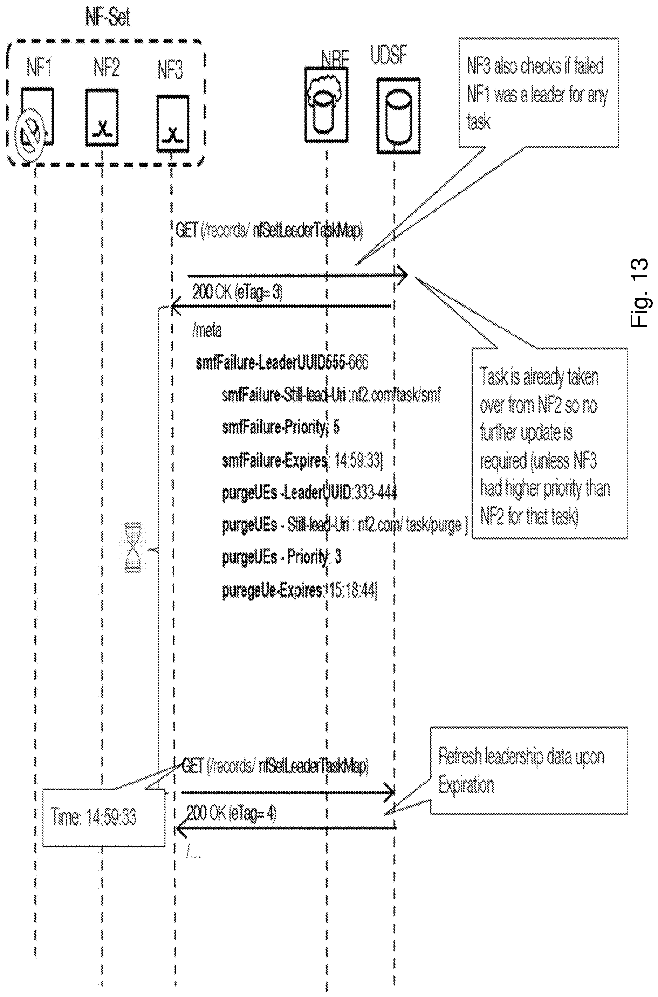

According to example embodiments, collision handling in case multiple NFs (NF instances) attempt to acquire the leadership for the same task is resolved by using the eTag. Whenever the leadership for a task has expired, the NFs (NF instances) of an NF set poll the UDSF to acquire the latest NF set leader information as shown in Figure 13 illustrating a schematic diagram of signaling sequences according to example embodiments.

As shown in Figure 13, once NF 3 recognizes that NF 1 is unavailable, according to example embodiments, NF 3 as well checks with the UDSF whether NF 1 was a leader for any task (GET request).

Since the task "smfFailure" is already taken over by NF 2, the response from the UDSF indicates no task being led by NF 1 (so no further update is required, unless NF 3 had a higher priority than NF 2 for that task).

Upon expiry according to the "Expires" tag of the "smfFailure", the NF 3 refreshes leadership data (GET request).

It is noted that if the leader election implementation according to example embodiments has selected to not use the option to broadcast leadership acquisition to all NFs (NF instances) in the set (e.g. in case the UDSF does not support data change notifications and Callback URI is not added in the profile in the NRF as explained above), once the NF (NF instance) has taken leadership for a task, it cannot pass on the leadership to another NF (NF instance) before it expires since only the task leaders' callbackURI/priority is known by all NFs (NF instances). According to example embodiments, this is taken into account at deployment when defining the appropriate Expiration duration for each task leadership.

In the following, example embodiments based on the NRF API are described in more detail (NRF based leader selection).

When an NF instance is initially added in an NF set, the NF instance acquires the nfSetLeaderTaskMap from the NRF. According to example embodiments, the task map is stored in an NF set profile.

If the NF instance is the first NF (NF instance) added in the NF set and the nfSetLeaderTaskMap is not stored, the NF (NF instance) creates the record setting itself as the leader NF (NF instance) for all the tasks so that it can be acquired by the NF instances that will subsequently be added in the NF set.

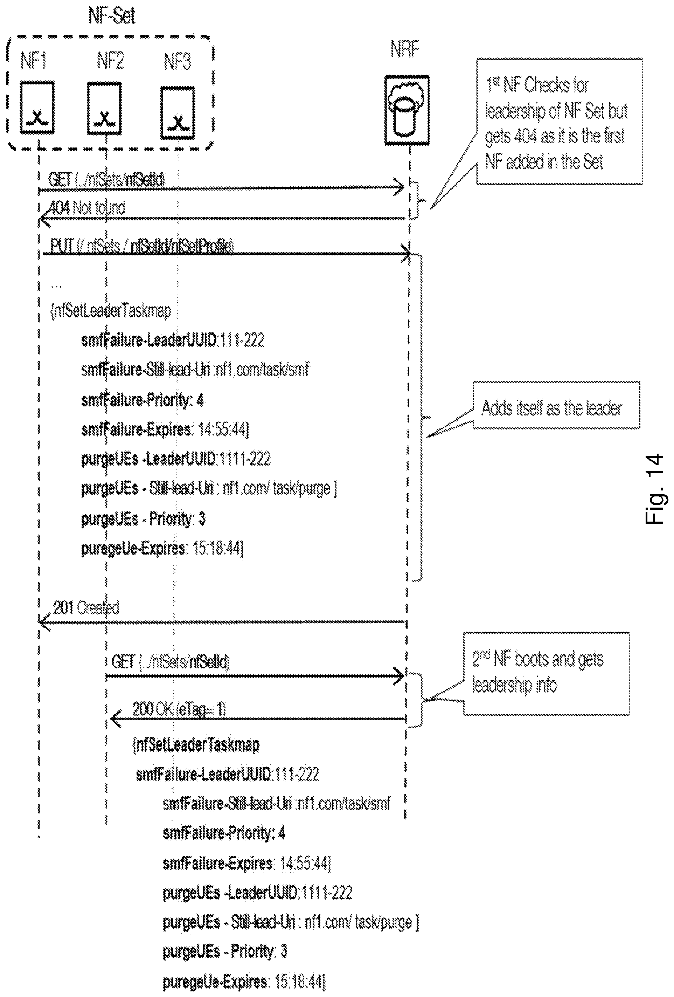

Figure 14 shows a schematic diagram of signaling sequences according to example embodiments.

As shown in Figure 14, an NF (NF 1) acquires the nfSetLeaderTaskMap from the NRF (GET request), while this request is responded with "404 Not found" (if the nfSetLeaderTaskMap is not stored).

As a consequence, the NF 1 adds itself as the leader for the tasks "smfFailure" and "purgeUe" ["purgeUEs"] (PUT request).

Once a further NF (NF 2) requests the nfSetLeaderTaskMap from the NRF, the NF 2 is provided with the current leadership entries.

If an NF instance has higher priority for a task than the current task leader, it updates the relevant task(s) in the nfSetLeaderTaskMap. According to example embodiments, the NRF accordingly notifies the other NF instances of the NF set about the leadership change by sending the new NF set profile.

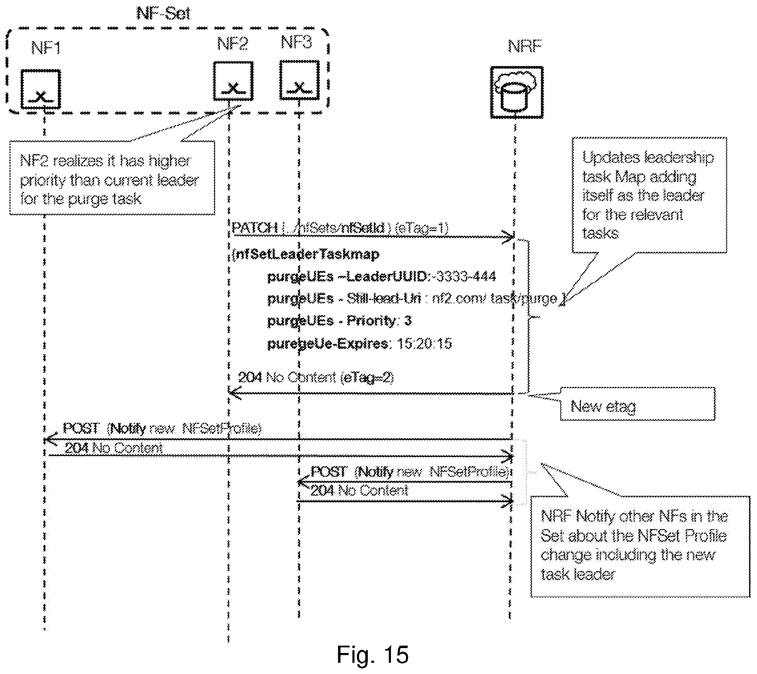

Figure 15 shows a schematic diagram of signaling sequences according to example embodiments. In particular, Figure 15 illustrated the aforementioned procedure.

As shown in Figure 15, once NF 2 realizes that it has a higher priority than the current leader for the "purgeUe" task, the NF 2 initiates an update with respect to the "purgeUe" task at the NRF (PATCH request).

Further, the NRF notifies the other NF instances (NF 1, NF 3) of the change of the leadership with the new NFSetProfile (POST request).

The NF (NF instance) in the NF set can detect loss of availability of the NF (NF instance) being a task leader by NRF status notifications or by directly polling the task leaders call back URI. In case an NF instance in an NF set realizes that an NF instance that is a leader is no longer available, the realizing NF instance will attempt to acquire the leadership irrespective of whether if it has lower priority than the current leader. According to example embodiments, prior to attempting to do so, the realizing NF instance may check whether another NF (NF instance) has already managed to acquire the leadership.

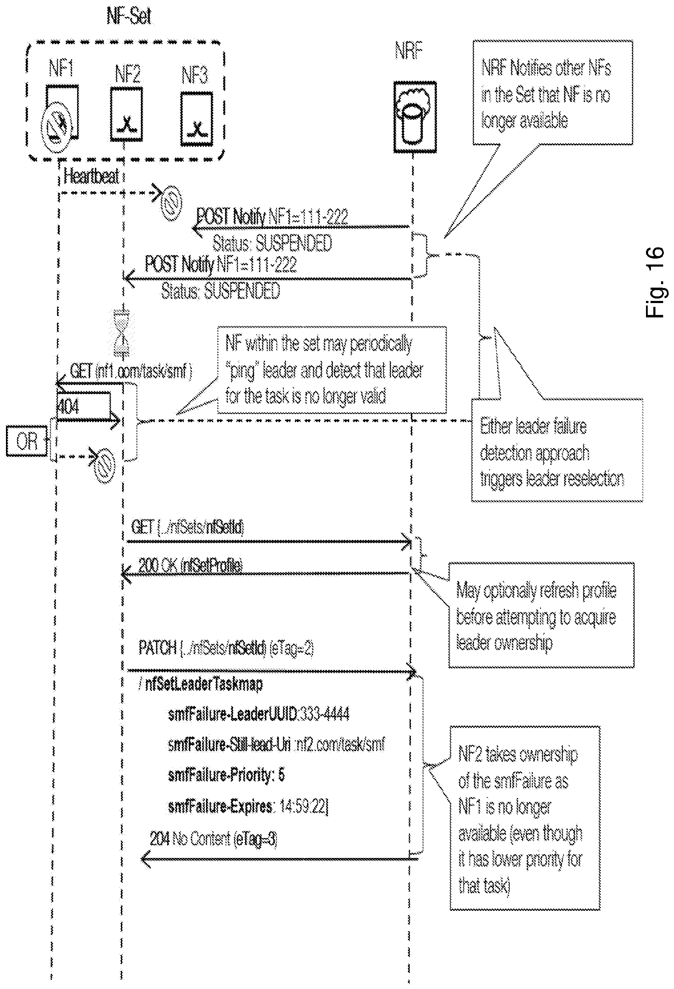

Figure 16 shows a schematic diagram of signaling sequences according to example embodiments. In particular, Figure 16 illustrates the aforementioned procedure.

As shown in Figure 16, NF 2 (and NF 3) may become aware of unavailability of NF 1 by notification from the NRF or by pinging the task leader (NF 1).

Once NF 2 recognizes that NF 1 is unavailable, according to example embodiments, NF 2 optionally refreshes the profile before attempting to acquire leader ownership.

If the optional refresh reveals that there are unled tasks, or if the profile is not refreshed, according to example embodiments, NF 2 takes ownership of the task "smfFailure" irrespective of its lower priority, i.e., the NF 2 initiates an update with respect to the "smfFailure" task at the NRF (PATCH request).

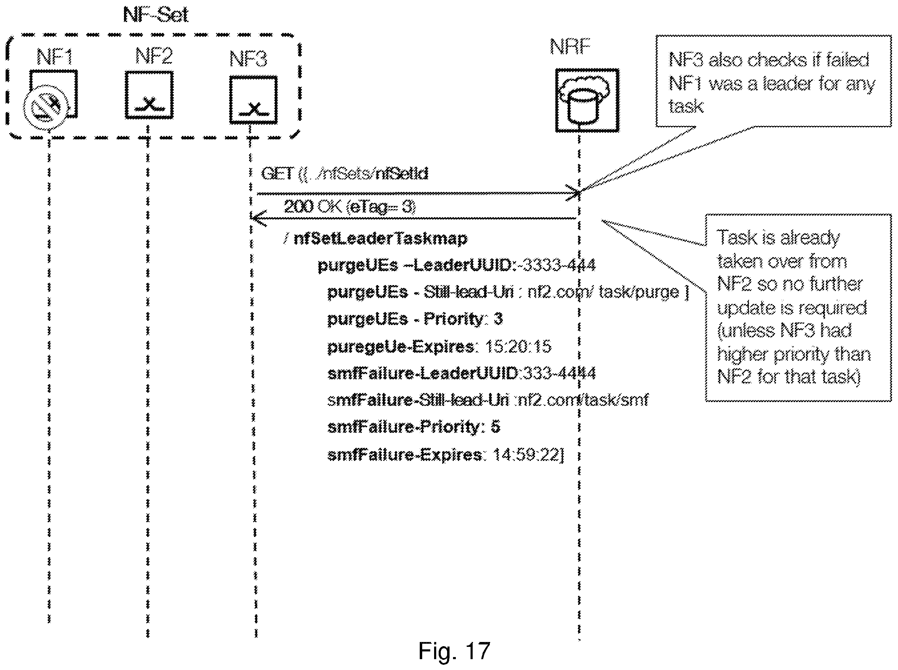

Figure 17 shows a schematic diagram of signaling sequences according to example embodiments.

As shown in Figure 17, once NF 3 recognizes that NF 1 is unavailable, according to example embodiments, NF 3 as well checks with the NRF whether NF 1 was a leader for any task (GET request).

Since the task "smfFailure" is already taken over by NF 2, the response from NRF indicates no task being led by NF 1 (so no further update is required, unless NF 3 had a higher priority than NF 2 for that task).

According to example embodiments, advantageously, the benefits of NF set are retained, while also introducing additional efficient mechanisms to perform the tasks that are common to all NFs (NF instances) within the NF set.

Further, according to example embodiments, advantageously, the 3GPP NFs (NF instances) and APIs are used, and thus existing security and availability framework are reused.

Further, according to example embodiments, advantageously, standard 3GPP APIs are used, which allows multivendor implementation (e.g. UDSF/NRF and NF (NF instance) within the NF set may be from different vendors).

Further, according to example embodiments, advantageously, customizable leader scope granularity and leader failure detection time are supported to adapt to versatile use cases.

Further, advantageously, example embodiments, are infrastructure independent (e.g. Kubernetes, Zookeeper, Amazon AWS, etc.).

Further, advantageously, example embodiments related to UDSF can be implemented without additions to the existing Rel16 UDSF APIs.

Furthermore, advantageously, example embodiments related to NRF can be used as a standard for leadership election in multivendor NF set implementations and can be supported even if deployment does not include UDSF.

Furthermore, advantageously, at least example embodiments related to NRF can also be extended to support common tasks for all NFs (NF instances) within a certain group (e.g. in case of unified data management (UDM), unified data repository (UDR), AUSF groups).

The above-described procedures and functions may be implemented by respective functional elements, processors, or the like, as described below.

In the foregoing exemplary description of the network entity, only the units that are relevant for understanding the principles of the disclosure have been described using functional blocks. The network entity may comprise further units that are necessary for its respective operation. However, a description of these units is omitted in this specification. The arrangement of the functional blocks of the devices is not construed to limit the disclosure, and the functions may be performed by one block or further split into sub-blocks.

When in the foregoing description it is stated that the apparatus, i.e. network entity (or some other means) is configured to perform some function, this is to be construed to be equivalent to a description stating that a (i.e. at least one) processor or corresponding circuitry, potentially in cooperation with computer program code stored in the memory of the respective apparatus, is configured to cause the apparatus to perform at least the thus mentioned function. Also, such function is to be construed to be equivalently implementable by specifically configured circuitry or means for performing the respective function (i.e. the expression "unit configured to" is construed to be equivalent to an expression such as "means for").

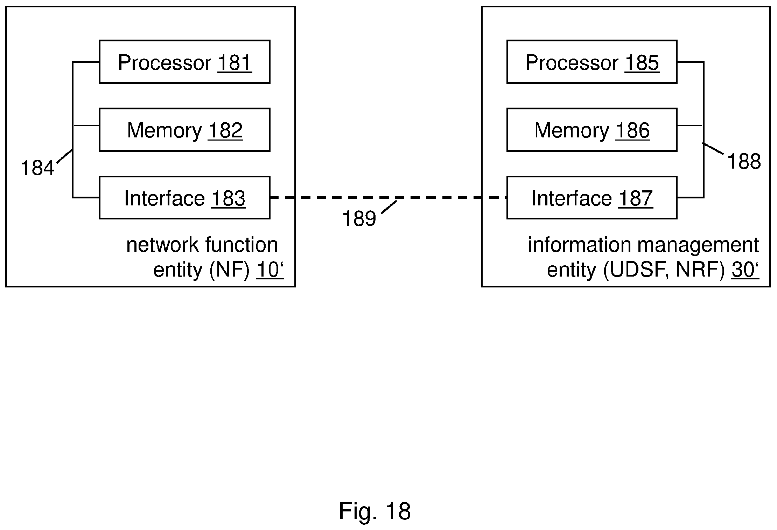

In Figure 18, an alternative illustration of apparatuses according to example embodiments is depicted. As indicated in Figure 18, according to example embodiments, the apparatus (network node/network function entity) 10' (corresponding to the network function entity 10) comprises a processor 181, a memory 182 and an interface 183, which are connected by a bus 184 or the like. Further, according to example embodiments, the apparatus (network node/information management entity) 30' (corresponding to the information management entity 30) comprises a processor 185, a memory 186 and an interface 187, which are connected by a bus 188 or the like, and the apparatuses may be connected via link 189, respectively.

The processor 181/185 and/or the interface 183/187 may also include a modem or the like to facilitate communication over a (hardwire or wireless) link, respectively. The interface 183/187 may include a suitable transceiver coupled to one or more antennas or communication means for (hardwire or wireless) communications with the linked or connected device(s), respectively. The interface 183/187 is generally configured to communicate with at least one other apparatus, i.e. the interface thereof.

The memory 182/186 may store respective programs assumed to include program instructions or computer program code that, when executed by the respective processor, enables the respective electronic device or apparatus to operate in accordance with the example embodiments.

In general terms, the respective devices/apparatuses (and/or parts thereof) may represent means for performing respective operations and/or exhibiting respective functionalities, and/or the respective devices (and/or parts thereof) may have functions for performing respective operations and/or exhibiting respective functionalities.

When in the subsequent description it is stated that the processor (or some other means) is configured to perform some function, this is to be construed to be equivalent to a description stating that at least one processor, potentially in cooperation with computer program code stored in the memory of the respective apparatus, is configured to cause the apparatus to perform at least the thus mentioned function. Also, such function is to be construed to be equivalently implementable by specifically configured means for performing the respective function (i.e. the expression "processor configured to [cause the apparatus to] perform xxx-ing" is construed to be equivalent to an expression such as "means for xxx-ing").

According to example embodiments, an apparatus representing the network node/network function entity 10 comprises at least one processor 181, at least one memory 182 including computer program code, and at least one interface 183 configured for communication with at least another apparatus. The processor (i.e. the at least one processor 181, with the at least one memory 182 and the computer program code) is configured to perform recognizing addition of said network function entity to a network entity composition (thus the apparatus comprising corresponding means for recognizing), to perform acquiring task coordination responsibility information with respect to said network entity composition (thus the apparatus comprising corresponding means for acquiring), to perform analyzing said task coordination responsibility information (thus the apparatus comprising corresponding means for analyzing), and to perform initiating, if said task coordination responsibility information does not define a valid task coordination responsible for a specific task, addition of said network function entity as said task coordination responsible for said specific task (thus the apparatus comprising corresponding means for initiating).

According to example embodiments, an apparatus representing the network node/information management entity 30 (providing task coordination responsibility information) comprises at least one processor 185, at least one memory 186 including computer program code, and at least one interface 187 configured for communication with at least another apparatus. The processor (i.e. the at least one processor 185, with the at least one memory 186 and the computer program code) is configured to perform receiving, from a network function entity in a network entity composition, a request for task coordination responsibility information with respect to said network entity composition (thus the apparatus comprising corresponding means for receiving), and to perform transmitting said task coordination responsibility information (thus the apparatus comprising corresponding means for transmitting).

For further details regarding the operability/functionality of the individual apparatuses, reference is made to the above description in connection with any one of Figures 1 to 17, respectively.

For the purpose of the present disclosure as described herein above, it should be noted that
- method steps likely to be implemented as software code portions and being run using a processor at a network server or network entity (as examples of devices, apparatuses and/or modules thereof, or as examples of entities including apparatuses and/or modules therefore), are software code independent and can be specified using any known or future developed programming language as long as the functionality defined by the method steps is preserved;
- generally, any method step is suitable to be implemented as software or by hardware without changing the idea of the embodiments and its modification in terms of the functionality implemented;
- method steps and/or devices, units or means likely to be implemented as hardware components at the above-defined apparatuses, or any module(s) thereof, (e.g., devices carrying out the functions of the apparatuses according to the embodiments as described above) are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components;
- devices, units or means (e.g. the above-defined network entity or network register, or any one of their respective units/means) can be implemented as individual devices, units or means, but this does not exclude that they are implemented in a distributed fashion throughout the system, as long as the functionality of the device, unit or means is preserved;
- an apparatus like the user equipment and the network entity /network register may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;
- a device may be regarded as an apparatus or as an assembly of more than one apparatus, whether functionally in cooperation with each other or functionally independently of each other but in a same device housing, for example.

In general, it is to be noted that respective functional blocks or elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, any method step is suitable to be implemented as software or by hardware without changing the idea of the present disclosure. Devices and means can be implemented as individual devices, but this does not exclude that they are implemented in a distributed fashion throughout the system, as long as the functionality of the device is preserved. Such and similar principles are to be considered as known to a skilled person.

Software in the sense of the present description comprises software code as such comprising code means or portions or a computer program or a computer program product for performing the respective functions, as well as software (or a computer program or a computer program product) embodied on a tangible medium such as a computer-readable (storage) medium having stored thereon a respective data structure or code means/portions or embodied in a signal or in a chip, potentially during processing thereof.

The present disclosure also covers any conceivable combination of method steps and operations described above, and any conceivable combination of nodes, apparatuses, modules or elements described above, as long as encompassed within the scope of the invention as defined by the appended claims.

In view of the above, there are provided measures for task responsibility coordination. Such measures exemplarily comprise recognizing addition of said network function entity to a network entity composition, acquiring task coordination responsibility information with respect to said network entity composition, analyzing said task coordination responsibility information, and initiating, if said task coordination responsibility information does not define a valid task coordination responsible for a specific task, addition of said network function entity as said task coordination responsible for said specific task.

Even though the disclosure is described above with reference to the examples according to the accompanying drawings, it is to be understood that the disclosure is not restricted thereto. Rather, it is apparent to those skilled in the art that the present disclosure can be modified in many ways without departing from the scope of the invention, which is defined by the appended claims.

### List of acronyms and abbreviations

- 3GPP: Third Generation Partnership Project
- 5GC: 5G Core Network
- AMF: access and mobility management function
- API: application programming interface
- AUSF: authentication server function
- CP: control plane
- IE: information element
- NF: network function
- NRF: network repository function
- NSSF: network slice selection function
- OAM: operations, administration and maintenance
- PDU: packet data unit
- RAN: radio access network
- SMF: session management function
- UDM: unified data management
- UDR: unified data repository
- UDSF: unstructured data storage function
- UE: user equipment
- VNF: virtual network function

## Claims

1. A method of a 3GPP 5G control plane network function entity (10), the method comprising:
recognizing (S51) addition of said network function entity to a network entity composition, wherein said network entity composition is one of a network function set, a network function service set, and a network function group acting as a redundant system,
acquiring (S52) task coordination responsibility information with respect to said network entity composition,
analyzing (S53) said task coordination responsibility information, and
initiating (S54), if said task coordination responsibility information does not define a valid task coordination responsible for a specific task, addition of said network function entity as said task coordination responsible for said specific task.

2. An apparatus of a 3GPP 5G control plane network function entity (10), the apparatus comprising:
recognizing means (11) configured to recognize addition of said network function entity to a network entity composition, wherein said network entity composition is one of a network function set, a network function service set, and a network function group acting as a redundant system,
acquiring means (12) configured to acquire task coordination responsibility information with respect to said network entity composition,
analyzing means (13) configured to analyze said task coordination responsibility information, and
initiating means (14) configured to initiate, if said task coordination responsibility information does not define a valid task coordination responsible for a specific task, addition of said network function entity as said task coordination responsible for said specific task.

3. The apparatus according to claim 2, further comprising
transmitting means (21) configured to transmit a new task coordination responsibility information record including information on said specific task and an identifier of said network function entity.

4. The apparatus according to claim 3, wherein
said new task coordination responsibility information record is transmitted towards an unstructured data storage function entity, or
said new task coordination responsibility information record is transmitted towards a network repository function entity.

5. The apparatus according to any of claims 2 to 4, further comprising
comparing means (22) configured to compare, if said task coordination responsibility information defines a valid task coordination responsible for said specific task, a priority of said task coordination responsible for said specific task with a priority of said network function entity for said specific task, and
the initiating means (14) further configured to initiate, if said priority of said network function entity for said specific task is higher than said priority of said task coordination responsible for said specific task, a replacement of said task coordination responsible for said specific task by said network function entity as a new task coordination responsible for said specific task.

6. The apparatus according to any of claims 2 to 4, further comprising
comparing means (22) configured to compare, if said task coordination responsibility information defines a valid task coordination responsible for said specific task, information on expiry of task coordination responsibility of said task coordination responsible for said specific task with a present point in time, and
the initiating means (14) further configured to initiate, if said information on expiry of task coordination responsibility of said task coordination responsible for said specific task indicates that task coordination responsibility of said task coordination responsible for said specific task is expired at said present point in time, a replacement of said task coordination responsible for said specific task by said network function entity as a new task coordination responsible for said specific task.

7. The apparatus according to any of claims 2 to 4, further comprising
determining means (23) configured to determine availability of said task coordination responsible for said specific task, and
the initiating means (14) further configured to initiate, if said task coordination responsible for said specific task is determined unavailable, a replacement of said task coordination responsible for said specific task by said network function entity as a new task coordination responsible for said specific task.

8. The apparatus according to any of claims 5 to 7, further comprising
transmitting means (21) configured to transmit an update task coordination responsibility information record including information on said specific task and an identifier of said network function entity.

9. The apparatus according to claim 8, wherein
said update task coordination responsibility information record is transmitted towards an unstructured data storage function entity, or
said update task coordination responsibility information record is transmitted towards a network repository function entity.

10. The apparatus according to any of claims 6 to 8, further comprising
transmitting means (21) configured to transmit, towards said task coordination responsible for said specific task, an indication that said task coordination responsible for said specific task is replaced by said network function entity as said new task coordination responsible for said specific task.

11. The apparatus according to any of claims 2 to 10, further comprising
receiving means (24) configured to receive, from a network repository function entity or an unstructured data storage function entity, information on a change of task coordination responsibility for said specific task.

12. The apparatus according to any of claims 2 to 11, wherein
said network function entity has registered as task coordination responsible for a first task, and the apparatus further comprises
receiving means (24) configured to receive, from a new task coordination responsible for said first task, an indication that said network function entity is replaced by said new task coordination responsible for said first task as said new task coordination responsible for said first task.

13. The apparatus according to any of claims 2 to 12, wherein
an entry specific for a certain task of said task coordination responsibility information includes information on at least said certain task, an identifier of a task coordination responsible for said certain task, a priority of said task coordination responsible for said certain task, information on expiry of responsibility of said task coordination responsible for said certain task, and a uniform resource identifier of said task coordination responsible for said certain task.

14. A computer program product comprising computer-executable computer program code which, when the program is run on a computer, is configured to cause the computer to carry out the method according to claim 1.

## Patentansprüche

1. Verfahren einer 3GPP-5G-Steuerebenennetzwerkfunktionsentität (10), wobei das Verfahren Folgendes umfasst:
Erkennen (S51) einer Hinzufügung der Netzwerkfunktionsentität zu einer Netzwerkentitätszusammensetzung, wobei die Netzwerkentitätszusammensetzung eine von einem Netzwerkfunktionssatz, einem Netzwerkfunktionsdienstsatz und einer Netzwerkfunktionsgruppe ist, die als ein redundantes System fungiert,
Erfassen (S52) von Aufgabenkoordinierungsverantwortungsinformationen mit Bezug auf die Netzwerkentitätszusammensetzung,
Analysieren (S53) der Aufgabenkoordinierungsverantwortungsinformationen, und
Initiieren (S54) einer Hinzufügung der Netzwerkfunktionsentität als die Aufgabenkoordinierung, die für die spezifische Aufgabe verantwortlich ist, wenn die Aufgabenkoordinierungsverantwortungsinformationen keine gültige Aufgabenkoordinierung definieren, die für eine spezifische Aufgabe verantwortlich ist.

2. Vorrichtung einer 3GPP-5G-Steuerebenennetzwerkfunktionsentität (10), wobei die Vorrichtung Folgendes umfasst:
Erkennungsmittel (11), die dazu ausgelegt sind, eine Hinzufügung der Netzwerkfunktionsentität zu einer Netzwerkentitätszusammensetzung zu erkennen, wobei die Netzwerkentitätszusammensetzung eine von einem Netzwerkfunktionssatz, einem Netzwerkfunktionsdienstsatz und einer Netzwerkfunktionsgruppe ist, die als ein redundantes System fungiert,
Erfassungsmittel (12), die dazu ausgelegt sind, Aufgabenkoordinierungsverantwortungsinformationen mit Bezug auf die Netzwerkentitätszusammensetzung zu erfassen,
Analysemittel (13), die dazu ausgelegt sind, die Aufgabenkoordinierungsverantwortungsinformationen zu analysieren, und
Initiierungsmittel (14), die dazu ausgelegt sind, eine Hinzufügung der Netzwerkfunktionsentität als die Aufgabenkoordinierung, die für die spezifische Aufgabe verantwortlich ist, zu initiieren, wenn die Aufgabenkoordinierungsverantwortungsinformationen keine gültige Aufgabenkoordinierung definieren, die für eine spezifische Aufgabe verantwortlich ist.

3. Vorrichtung nach Anspruch 2, die ferner Folgendes umfasst
Übertragungsmittel (21), die dazu ausgelegt sind, einen neuen Aufgabenkoordinierungsverantwortungsinformationsdatensatz zu übertragen, der Informationen über die spezifische Aufgabe und eine Kennung der Netzwerkfunktionsentität beinhaltet.

4. Vorrichtung nach Anspruch 3, wobei
der neue Aufgabenkoordinierungsverantwortungsinformationsdatensatz zu einer unstrukturierten Datenspeicherfunktionsentität übertragen wird, oder
der neue Aufgabenkoordinierungsverantwortungsinformationsdatensatz zu einer unstrukturierten Netzwerkrepositoriumsfunktionsentität übertragen wird.

5. Vorrichtung nach einem der Ansprüche 2 bis 4, die ferner Folgendes umfasst
Vergleichsmittel (22), die, wenn die Aufgabenkoordinierungsverantwortungsinformationen eine gültige Aufgabenkoordinierung definieren, die für die spezifische Aufgabe verantwortlich ist, dazu ausgelegt sind, eine Priorität der Aufgabenkoordinierung, die für die spezifische Aufgabe verantwortlich ist, mit einer Priorität der Netzwerkfunktionsentität für die spezifische Aufgabe zu vergleichen, und
die Initiierungsmittel (14), die, wenn die Priorität der Netzwerkfunktionsentität für die spezifische Aufgabe höher ist als die Priorität der Aufgabenkoordinierung, die für die spezifische Aufgabe verantwortlich ist, ferner dazu ausgelegt sind, ein Ersetzen der Aufgabenkoordinierung, die für die spezifische Aufgabe verantwortlich ist, durch die Netzwerkfunktionsentität als eine neue Aufgabenkoordinierung, die für die spezifische Aufgabe verantwortlich ist, zu initiieren.

6. Vorrichtung nach einem der Ansprüche 2 bis 4, die ferner Folgendes umfasst
Vergleichsmittel (22), die, wenn die Aufgabenkoordinierungsverantwortungsinformationen eine gültige Aufgabenkoordinierung definieren, die für die spezifische Aufgabe verantwortlich ist, dazu ausgelegt sind, Informationen über einen Ablauf einer Aufgabenkoordinierungsverantwortung der Aufgabenkoordinierung, die für die spezifische Aufgabe verantwortlich ist, mit einem gegenwärtigen Zeitpunkt zu vergleichen, und
die Initiierungsmittel (14), die, wenn die Informationen über einen Ablauf einer Aufgabenkoordinierungsverantwortung der Aufgabenkoordinierung, die für die spezifische Aufgabe verantwortlich ist, anzeigt, dass eine Aufgabenkoordinierungsverantwortung der Aufgabenkoordinierung, die für die spezifische Aufgabe verantwortlich ist, zum gegenwärtigen Zeitpunkt abgelaufen ist, ferner dazu ausgelegt sind, ein Ersetzen der Aufgabenkoordinierung, die für die spezifische Aufgabe verantwortlich ist, durch die Netzwerkfunktionsentität als eine neue Aufgabenkoordinierung, die für die spezifische Aufgabe verantwortlich ist, zu initiieren.

7. Vorrichtung nach einem der Ansprüche 2 bis 4, die ferner Folgendes umfasst
Bestimmungsmittel (23), die dazu ausgelegt sind, eine Verfügbarkeit der Aufgabenkoordinierung, die für die spezifische Aufgabe verantwortlich ist, zu bestimmen, und
die Initiierungsmittel (14), die, wenn bestimmt wird, dass die Aufgabenkoordinierung, die für die spezifische Aufgabe verantwortlich ist, nicht verfügbar ist, ferner dazu ausgelegt sind, ein Ersetzem der Aufgabenkoordinierung, die für die spezifische Aufgabe verantwortlich ist, durch die Netzwerkfunktionsentität als eine neue Aufgabenkoordinierung zu initiieren, die für die spezifische Aufgabe verantwortlich ist.

8. Vorrichtung nach einem der Ansprüche 5 bis 7, die ferner Folgendes umfasst
Übertragungsmittel (21), die dazu ausgelegt sind, einen aktualisierten Aufgabenkoordinierungsverantwortungsinformationsdatensatz zu übertragen, der Informationen über die spezifische Aufgabe und eine Kennung der Netzwerkfunktionsentität beinhaltet.

9. Vorrichtung nach Anspruch 8, wobei
der aktualisierte Aufgabenkoordinierungsverantwortungsinformationsdatensatz zu einer unstrukturierten Datenspeicherfunktionsentität übertragen wird, oder
der aktualisierte Aufgabenkoordinierungsverantwortungsinformationsdatensatz zu einer unstrukturierten Netzwerkrepositoriumsfunktionsentität übertragen wird.

10. Vorrichtung nach einem der Ansprüche 6 bis 8, die ferner Folgendes umfasst
Übertragungsmittel (21), die dazu ausgelegt sind, eine Anzeige zur Aufgabenkoordinierung, die für die spezifische Aufgabe verantwortlich ist, dazu zu übertragen, dass die Aufgabenkoordinierung, die für die spezifische Aufgabe verantwortlich ist, durch die Netzwerkfunktionsentität als die neue Aufgabenkoordinierung, die für die spezifische Aufgabe verantwortlich ist, ersetzt wurde.

11. Vorrichtung nach einem der Ansprüche 2 bis 10, die ferner Folgendes umfasst
Empfangsmittel (24), die dazu ausgelegt sind, Informationen über eine Änderung einer Aufgabenkoordinierung, die für die spezifische Aufgabe verantwortlich ist, von einer Netzwerkrepositoriumsfunktionsentität oder einer unstrukturierten Datenspeicherfunktionsentität zu empfangen.

12. Vorrichtung nach einem der Ansprüche 2 bis 11, wobei
die Netzwerkfunktionsentität als Aufgabenkoordinierung, die für eine erste Aufgabe verantwortlich ist, registriert wurde und die Vorrichtung ferner Folgendes umfasst
Empfangsmittel (24), die dazu ausgelegt sind, eine Anzeige dazu, dass die Netzwerkfunktionsentität durch eine neue Aufgabenkoordinierung, die für die erste Aufgabe verantwortlich ist, als die Aufgabenkoordinierung, die für die erste Aufgabe verantwortlich ist, ersetzt wurde, von der neuen Aufgabenkoordinierung, die für die erste Aufgabe verantwortlich ist, zu empfangen.

13. Vorrichtung nach einem der Ansprüche 2 bis 12, wobei
ein Eintrag, der für eine bestimmte Aufgabe der Aufgabenkoordinierungsverantwortungsinformationen spezifisch ist, Informationen zu mindestens der bestimmten Aufgabe, einer Kennung einer Aufgabenkoordinierung, die für die bestimmte Aufgabe verantwortlich ist, einer Priorität der Aufgabenkoordinierung, die für die bestimmte Aufgabe verantwortlich ist, Informationen zu einem Ablauf einer Verantwortung der Aufgabenkoordinierung, die für die bestimmte Aufgabe verantwortlich ist, und einer einheitlichen Ressourcenkennung der Aufgabenkoordinierung, die für die bestimmte Aufgabe verantwortlich ist, beinhaltet.

14. Computerprogrammprodukt, das einen computerausführbaren Computerprogrammcode umfasst, der, wenn das Programm auf einem Computer läuft, dazu ausgelegt ist, den Computer zu veranlassen, das Verfahren nach Anspruch 1 umzusetzen.

## Revendications

1. Procédé d'une entité de fonction réseau de plan de contrôle 3GPP 5G (10), le procédé comprenant :
la reconnaissance (S51) de l'ajout de ladite entité de fonction réseau à une composition d'entité de réseau, dans lequel ladite composition d'entité de réseau est l'un parmi un jeu de fonctions réseau, un jeu de services de fonction réseau, et un groupe de fonctions réseau servant de système redondant,
l'acquisition (S52) d'informations de responsabilité de coordination de tâches par rapport à ladite composition d'entité de réseau,
l'analyse (S53) desdites informations de responsabilité de coordination de tâches, et
l'initiation (S54), si lesdites informations de responsabilité de coordination de tâches ne définissent pas une coordination de tâches valide responsable d'une tâche spécifique, de l'ajout de ladite entité de fonction réseau en tant que ladite coordination de tâches responsable de ladite tâche spécifique.

2. Appareil d'une entité de fonction réseau de plan de contrôle 3GPP 5G (10), l'appareil comprenant :
des moyens de reconnaissance (11) configurés pour reconnaître l'ajout de ladite entité de fonction réseau à une composition d'entité de réseau, dans lequel ladite composition d'entité de réseau est l'un parmi un jeu de fonctions réseau, un jeu de services de fonction réseau, et un groupe de fonctions réseau servant de système redondant,
des moyens d'acquisition (12) configurés pour acquérir des informations de responsabilité de coordination de tâches par rapport à ladite composition d'entité de réseau,
des moyens d'analyse (13) configurés pour analyser lesdites informations de responsabilité de coordination de tâches, et
des moyens d'initiation (14) configurés pour initier, si lesdites informations de responsabilité de coordination de tâches ne définissent pas une coordination de tâches valide responsable d'une tâche spécifique, l'ajout de ladite entité de fonction réseau en tant que ladite coordination de tâches responsable de ladite tâche spécifique.

3. Appareil selon la revendication 2, comprenant en outre des moyens d'émission (21) configurés pour émettre un nouvel enregistrement d'informations de responsabilité de coordination de tâches incluant des informations sur ladite tâche spécifique et un identifiant de ladite entité de fonction réseau.

4. Appareil selon la revendication 3, dans lequel
ledit nouvel enregistrement d'informations de responsabilité de coordination de tâches est émis vers une entité de fonction de stockage de données non structurées, ou
ledit nouvel enregistrement d'informations de responsabilité de coordination de tâches est émis vers une entité de fonction de référentiel de réseau.

5. Appareil selon l'une quelconque des revendications 2 à 4, comprenant en outre
des moyens de comparaison (22) configurés pour comparer, si lesdites informations de responsabilité de coordination de tâches définissent une coordination de tâches valide responsable de ladite tâche spécifique, une priorité de ladite coordination de tâches responsable de ladite tâche spécifique avec une priorité de ladite entité de fonction réseau pour ladite tâche spécifique, et
les moyens d'initiation (14) étant en outre configurés pour initier, si ladite priorité de ladite entité de fonction réseau pour ladite tâche spécifique est supérieure à ladite priorité de ladite coordination de tâches responsable de ladite tâche spécifique, un remplacement de ladite coordination de tâches responsable de ladite tâche spécifique par ladite entité de fonction réseau en tant que nouvelle coordination de tâches responsable de ladite tâche spécifique.

6. Appareil selon l'une quelconque des revendications 2 à 4, comprenant en outre
des moyens de comparaison (22) configurés pour comparer, si lesdites informations de responsabilité de coordination de tâches définissent une coordination de tâches valide responsable de ladite tâche spécifique, des informations sur l'expiration de la responsabilité de coordination de tâches de ladite coordination de tâches responsable de ladite tâche spécifique avec un instant présent, et
les moyens d'initiation (14) étant en outre configurés pour initier, si lesdites informations sur l'expiration de la responsabilité de coordination de tâches de ladite coordination de tâches responsable de ladite tâche spécifique indiquent que la responsabilité de coordination de tâches de ladite coordination de tâches responsable de ladite tâche spécifique a expiré audit instant présent, un remplacement de ladite coordination de tâches responsable de ladite tâche spécifique par ladite entité de fonction réseau en tant que nouvelle coordination de tâches responsable de ladite tâche spécifique.

7. Appareil selon l'une quelconque des revendications 2 à 4, comprenant en outre
des moyens de détermination (23) configurés pour déterminer une disponibilité de ladite coordination de tâches responsable de ladite tâche spécifique, et
les moyens d'initiation (14) étant en outre configurés pour initier, si ladite coordination de tâches responsable de ladite tâche spécifique est déterminée comme étant indisponible, un remplacement de ladite coordination de tâches responsable de ladite tâche spécifique par ladite entité de fonction réseau en tant que nouvelle coordination de tâches responsable de ladite tâche spécifique.

8. Appareil selon l'une quelconque des revendications 5 à 7, comprenant en outre
des moyens d'émission (21) configurés pour émettre un enregistrement d'informations de responsabilité de coordination de tâches mis à jour incluant des informations sur ladite tâche spécifique et un identifiant de ladite entité de fonction réseau.

9. Appareil selon la revendication 8, dans lequel
ledit enregistrement d'informations de responsabilité de coordination de tâches mis à jour est émis vers une entité de fonction de stockage de données non structurées, ou
ledit enregistrement d'informations de responsabilité de coordination de tâches mis à jour est émis vers une entité de fonction de référentiel de réseau.

10. Appareil selon l'une quelconque des revendications 6 à 8, comprenant en outre
des moyens d'émission (21) configurés pour émettre, vers ladite coordination de tâches responsable de ladite tâche spécifique, une indication que ladite coordination de tâches responsable de ladite tâche spécifique est remplacée par ladite entité de fonction réseau en tant que ladite nouvelle coordination de tâches responsable de ladite tâche spécifique.

11. Appareil selon l'une quelconque des revendications 2 à 10, comprenant en outre
des moyens de réception (24) configurés pour recevoir, en provenance d'une entité de fonction de référentiel de réseau ou d'une entité de fonction de stockage de données non structurées, des informations sur un changement de responsabilité de coordination de tâches pour ladite tâche spécifique.

12. Appareil selon l'une quelconque des revendications 2 à 11, dans lequel
ladite entité de fonction réseau s'est inscrite en tant que responsable de coordination de tâches pour une première tâche, et l'appareil comprend en outre
des moyens de réception (24) configurés pour recevoir, en provenance d'une nouvelle coordination de tâches responsable de ladite première tâche, une indication que ladite entité de fonction réseau est remplacée par ladite nouvelle coordination de tâches responsable de ladite première tâche en tant que ladite nouvelle coordination de tâches responsable de ladite première tâche.

13. Appareil selon l'une quelconque des revendications 2 à 12, dans lequel
une entrée spécifique pour une certaine tâche desdites informations de responsabilité de coordination de tâches inclut des informations sur au moins ladite certaine tâche, un identifiant d'une coordination de tâches responsable de ladite certaine tâche, une priorité de ladite coordination de tâches responsable de ladite certaine tâche, des informations sur l'expiration de la responsabilité de ladite coordination de tâches responsable de ladite certaine tâche, et un identifiant de ressource uniforme de ladite coordination de tâches responsable de ladite certaine tâche.

14. Produit programme d'ordinateur comprenant un code de programme d'ordinateur exécutable par ordinateur qui, lorsque le programme est lancé sur un ordinateur, est configuré pour amener l'ordinateur à effectuer le procédé selon la revendication 1.
